(19) Europäisches Patentamt / European Patent Office / Office européen des brevets

(11) **EP 4 244 589 B1**

(12) **FASCICULE DE BREVET EUROPEEN**

(45) Date de publication et mention de la délivrance du brevet:
**09.10.2024 Bulletin 2024/41**

(21) Numéro de dépôt: **21801561.8**

(22) Date de dépôt: **03.11.2021**

(51) Classification Internationale des Brevets (IPC):
**G01K 17/20** (2006.01)

(52) Classification Coopérative des Brevets (CPC):
**G01K 17/20**

(86) Numéro de dépôt international:
**PCT/EP2021/080473**

(87) Numéro de publication internationale:
**WO 2022/101067 (19.05.2022 Gazette 2022/20)**

(54) **SYSTÈME AMÉLIORÉ DE DÉTERMINATION DE COEFFICIENT D'ÉCHANGE THERMIQUE**

VERBESSERTES SYSTEM ZUR BESTIMMUNG EINES WÄRMEAUSTAUSCHKOEFFIZIENTEN

IMPROVED SYSTEM FOR DETERMINING A HEAT EXCHANGE COEFFICIENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2020 FR 2011609**

(43) Date de publication de la demande:
**20.09.2023 Bulletin 2023/38**

(73) Titulaire: **Commissariat à l'Energie Atomique et aux Energies Alternatives**
**75015 Paris (FR)**

(72) Inventeur: **BRAILLARD, Olivier**
**13770 Venelles (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 3 339 828     FR-A1- 2 940 435**
**US-A- 5 406 246**

EP 4 244 589 B1

**Description**

**Domaine technique de l'invention**

La présente invention concerne un système amélioré de détermination de coefficient d'échange thermique.

**Etat de la technique**

La connaissance du coefficient d'échange thermique entre une paroi et un fluide, par exemple entre une paroi de canalisation et un fluide qui s'écoule dans la canalisation est une donnée essentielle pour calculer les échanges de chaleur entre le fluide et la paroi.

Au-delà de connaître la quantité d'énergie qui est transférée à la paroi par le fluide, le coefficient d'échange thermique permet d'indiquer si ce transfert est efficace ou non, ou du moins correspond à une valeur donnée, une limite basse ou haute, ou une plage de valeurs recherchée. Dans certains cas, on cherchera à l'amplifier (échangeurs de chaleur) et dans d'autre cas on cherchera à le réduire (déperdition thermique des bâtiments).

Le coefficient d'échange thermique est couramment utilisé, en conception, par exemple pour dimensionner les surfaces des échangeurs thermiques et pour calculer les puissances thermiques transmises par un fluide.

Le coefficient d'échange thermique est également utilisé en détection, la connaissance du coefficient d'échange thermique permettant de caractériser un dysfonctionnement tel que, par exemple, l'apparition d'un assèchement, l'apparition de cavitations ou la présence d'incondensables.

Par exemple, dans un échangeur à plaques ou à tubes, on souhaite optimiser le transfert de chaleur entre les deux fluides, et on peut viser en conception un coefficient d'échange d'au moins 20 kW/m$^2$/°C. En outre, dans le temps, le coefficient d'échange thermique d'un échangeur peut baisser significativement, par exemple lorsque celui-ci s'encrasse. Cela peut constituer une information précieuse pour un concepteur, un constructeur ou un utilisateur d'échangeur, par exemple pour connaître la fréquence de nettoyage et/ou de maintenance.

Au contraire, dans d'autres domaines comme celui de l'habitat où l'on cherche à isoler pour limiter les pertes thermiques, le coefficient d'échange recherché doit être faible à très faible.

Par conception, les résistances thermiques des murs, et notamment des isolants, sont inchangées dans le temps, donc leur coefficient d'échange demeure également constant. Seul le coefficient d'échange externe est sensible aux conditions de l'environnement atmosphérique avec ou non présence de vent et d'humidité. C'est ce coefficient d'échange qu'on cherche à mesurer et/ou à minimiser, son impact étant sensible dans le coefficient d'échange global. La valeur du coefficient d'échange externe peut évoluer entre 0,2 W/m$^2$/°C (sans vent) et 25 W/m$^2$/°C (vent à 10 m/s). Pour les valeurs les plus élevées, cela peut provoquer des déperditions de chaleur pouvant atteindre un facteur multiplicatif de 1,7, soit une augmentation de 70% de la déperdition globale de chaleur.

Le coefficient d'échange convectif ne se mesure pas directement à l'aide d'un capteur. Pour le déterminer, on utilise des modèles mathématiques de corrélation d'échange (modèle de Colburn, de Dittus-Bolter ou de Rosenhow) qui nécessitent la connaissance de certaines caractéristiques du fluide, telles que la vitesse, la viscosité, la température, etc.

La difficulté, voire l'impossibilité, qu'il y a à obtenir un coefficient d'échange thermique à l'aide des modèles de corrélation se manifeste dans de nombreuses applications industrielles comme, par exemple, les mélanges de fluides turbulents à grands écarts de température (fatigue thermique), la présence d'incon-densables, la présence de singularités, par exemple quand une paroi fait face à des tourbillons de fluide pouvant conduire à de l'assèchement.

La demande de brevet français FR2940435A1 intitulée « Dispositif de détermination de coefficient d'échange thermique et procédé associé » répond de façon particulièrement avantageuse au besoin de nombreuses applications industrielles dans lesquelles les modèles de corrélation d'échange sont inadaptés. Elle décrit un système de détermination de coefficient d'échange thermique entre un fluide et une paroi en un point P$_N$ d'une surface de la paroi en contact avec le fluide comprenant :

- un dispositif de mesure de température qui comprend :

-- deux capteurs de température de paroi, un premier capteur de température mesurant une première valeur de température T$_{C1}$ de la paroi en un point P$_1$ et un deuxième capteur de température mesurant une deuxième valeur de température T$_{C2}$ de la paroi en un point P$_2$ sensiblement aligné avec le point P$_1$ selon une droite normale à la surface au point P$_N$, le point P$_1$ étant le plus proche de la surface de la paroi, et

-- un capteur de température de fluide mesurant une valeur de température T$_F$ du fluide en un point P$_F$ du fluide sensiblement aligné avec les points P$_1$ et P$_2$, et

- un calculateur qui comprend : ·

-- des premiers moyens pour calculer, à partir des valeurs de température $T_{C1}$ et $T_{C2}$, une valeur de température $T_p$ de la paroi et un flux thermique $\Phi$ donné par l'équation :

$$\Phi = -\lambda \times \text{grad}\,(T_{C1} - T_{C2})$$

où $\lambda$ est la conductibilité thermique de la paroi,
-- et des seconds moyens pour calculer, à partir de la température de fluide $T_F$, de la température $T_P$ et du flux thermique $\Phi$ le coefficient d'échange thermique h sous la forme :

$$h = {}^{\Phi}\!/_{(T_F - T_P)}$$

La température $T_P$ est calculée, par exemple, selon une méthode inverse basée sur l'exploitation du flux déterminé à chaque instant. Cette méthode est présentée dans le document intitulé « Thermal load détermination in the mixing tee impacted by a turbulent flow generated by two fluids at large gap of température » (Olivier Braillard, Yvon Jarny, Guillaume Balmigere ; 13th International Conférence on Nuclear Engineering ; Pékin, Chine ; 16-20 Mai 2005 ; ICONE 13-50361).

La figure 1 correspond à la figure 1 de la demande de brevet FR2940435A1 et elle illustre un dispositif de mesure de température DT comprenant deux thermocouples D1, D2 placés dans la paroi P de la canalisation au plus près du fluide et aptes à prélever la température en des points respectifs $P_1$ et $P_2$ de la paroi (qui correspondent aux extrémités libres des thermocouples D1 et D2) et un thermocouple fluide DF débouchant dans le fluide F et apte à prélever la température en un point $P_F$ du fluide qui correspond à l'extrémité libre dudit thermocouple fluide. Les points $P_1$, $P_2$ et $P_F$ sont alignés selon une droite normale (selon la direction OZ), en un point $P_N$, à la surface de la paroi qui est au contact du fluide. Les thermocouples D1, D2 et DF sont placés à proximité de la surface de la paroi P, et le thermocouple fluide DF est orienté pour faire face à l'écoulement S du fluide F (écoulement selon la direction OX).

Les thermocouples D1 et D2 sont fixés dans une structure cylindrique formée par l'assemblage de deux demi-lunes L1, L2, cette structure étant elle-même fixée dans un corps principal 1, et la droite reliant les points $P_1$, $P_2$ et $P_F$ est confondue avec l'axe de la structure cylindrique formée par les deux demi-lunes L1, L2. Les thermocouples D1 et D2 traversent le corps principal 1 par une gaine G formée dans le corps principal 1 jusqu'à une ouverture qui est configurée pour recevoir la structure cylindrique tandis que le thermocouple fluide DF traverse le corps principal 1 par un trou 4 débouchant de très faible diamètre formé dans ledit corps principal jusqu'à atteindre l'intérieur de la canalisation où le fluide F circule.

Le corps principal 1 du dispositif de mesure de température est intégré dans une cavité de la paroi P formée à cet effet, grâce à la mise en place de cales 5 afin d'ajuster la position de la face du dispositif de mesure destinée à être au contact du fluide et d'un moyen de fixation tel un écrou E, l'étanchéité du dispositif de mesure étant assurée par un joint torique 3.

Chaque thermocouple D1, D2 et DF est formé par deux fils métalliques (de deux matériaux différents), le diamètre de chaque fil étant au moins égal à 25 $\mu$m.

Le thermocouple D1, qui est le plus proche du fluide, est situé (point $P_1$) à une distance d1 de la surface de la paroi P typiquement comprise entre 10$\mu$m et 3mm, par exemple 300$\mu$m. Le thermocouple D2, qui est le plus éloigné du fluide, est situé (point $P_2$) à une distance d2 de la surface de la paroi P typiquement comprise entre 100$\mu$m et 1cm, par exemple 500$\mu$m.

Le thermocouple fluide DF est situé à une distance df de la surface de la paroi P typiquement comprise entre 10$\mu$m et 1cm, par exemple 2000$\mu$m.

Le dispositif de mesure de température décrit permet de déterminer un gradient de température, sur la base de l'équation donnant la densité de flux thermique selon la direction OZ :

$$\varphi = -\lambda \times grad\,(T_{C1} - T_{C2}) = -\lambda\,{}^{\Delta T}\!/_{\Delta Z}$$

où $\lambda$ est la conductibilité thermique de la paroi.

Il ressort de cette équation que cette méthode de mesure du gradient de température n'est précise et fiable que si les points de mesure $P_1$, $P_2$ sont suffisamment éloignés pour assurer une mesure précise du gradient de température. En d'autres termes, pour un même flux de chaleur lié au gradient de température $\Delta T/\Delta x$, l'écart de température entre $P_1$ et $P_2$ sera plus élevé, donc plus précis, avec une distance entre $P_1$ et $P_2$ plus importante. Une distance minimale entre deux points de mesure a un impact sur les dimensions du dispositif, comme nous l'expliquons dans ce qui suit.

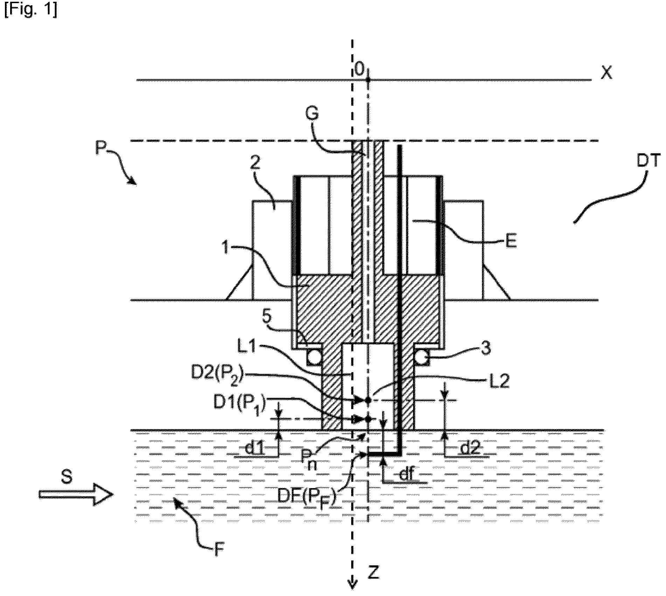

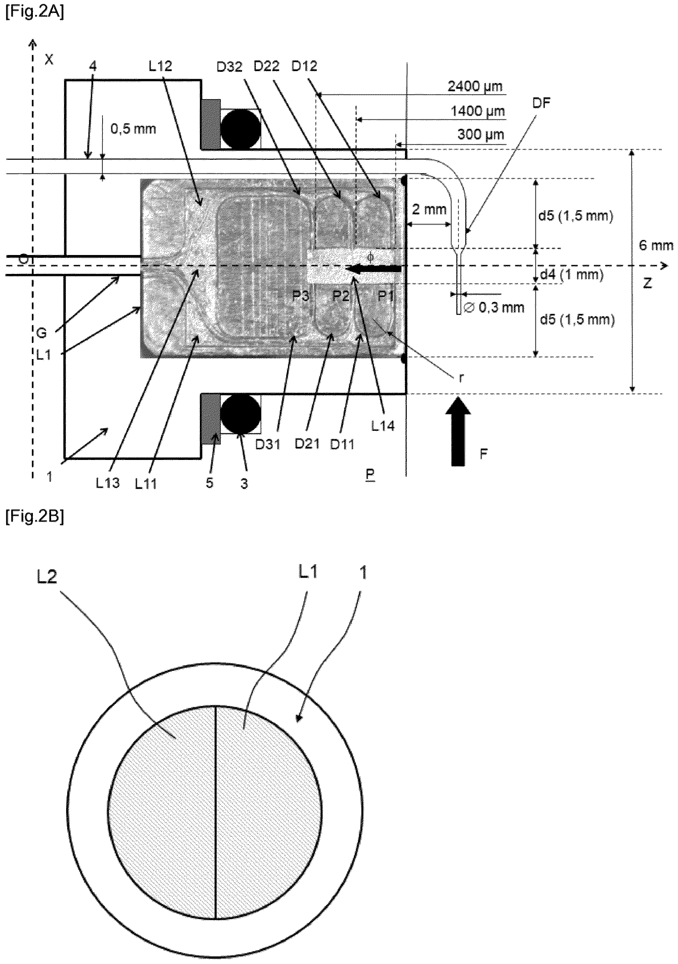

Les figures 2A et 2B illustrent un dispositif de mesure de température particulier pour un système de détermination de coefficient d'échange thermique. La figure 2A correspond à une coupe selon la direction OXZ de la figure 1, à la différence près qu'il comprend en outre un troisième thermocouple D3 à l'intérieur de la paroi P dont l'extrémité $P_3$ est alignée avec les points $P_1$, $P_2$ et $P_F$. Le troisième thermocouple D3 est encore plus éloigné du fluide F que le second thermocouple D2. Il est placé à une distance d3 de la surface de la paroi P typiquement comprise entre 1mm et 3cm du fluide, par exemple 2400$\mu$m. La figure 2B correspond à une coupe de la structure cylindrique formée par les deux demi-lunes L1, L2 selon le plan OXY dans laquelle on voit les soudures entre les deux demi-lunes et les soudures de chaque demi-lune avec le corps principal 1.

La figure 2A illustre plus précisément une demi-lune L1 dans laquelle des cheminements ont été gravés pour accueillir les six fils métalliques des trois thermocouples. Les deux fils D11 et D12 forment le thermocouple D1, les deux fils D21 et D22 forment le thermocouple D2 et les deux fils D31 et D32 forment le thermocouple D3. Les fils des thermocouples passent dans la gaine G puis dans les cheminements L11 et L12 gravés de part et d'autre d'une zone centrale L13 de la demi-lune pour déboucher au niveau d'une cavité L14 également gravée dans la demi-lune. Ainsi les fils de chaque thermocouple sont acheminés de manière à être disposés au bord de la cavité gravée L14 en vis-à-vis dans la direction OX, de manière symétrique par rapport à la direction OZ. Cette configuration permet que les deux fils de chaque thermocouple soient orientés perpendiculairement au flux thermique $\Phi$, qu'ils soient précisément placés l'un en face de l'autre et que les distances d1, d2, d3 soient précisément respectées (ce que ne permettrait pas une configuration avec des fils placés droits dans la direction OZ). Cette configuration est nécessaire pour mesurer un gradient de température très précis dans la direction OZ, comme requis dans les applications privilégiées de l'invention.

Dans la mesure où les deux fils de chaque thermocouple ne sont pas soudés entre eux directement mais via la pièce intermédiaire formée par la demi-lune et sa cavité, la distance entre les deux fils doit être faible pour capter la même température et ne pas former de biais de mesure, mais suffisamment importante pour canaliser vers les thermocouples le flux thermique $\Phi$ perpendiculaire à la circulation de fluide F. Ainsi la distance d4 entre les deux fils de chaque thermocouple (correspondant à la largeur de la cavité gravée), déterminée par l'inventeur, est de l'ordre de 1 millimètre.

Cette configuration nécessite que chaque fil de thermocouple suive un rayon de courbure r qui est a minima de 0,5 millimètre. Afin de permettre de respecter ce rayon de courbure pour tous les fils de thermocouple (chaque fil ayant un diamètre d'au moins 25 $\mu$m), l'inventeur a déterminé que la largeur d5 dans la direction OX de chaque zone comprise entre la cavité L14 et le bord de la demi-lune en contact avec le corps 1, qui correspond à la zone où sont acheminés les fils, est au moins égale à 1,5 millimètre.

Ainsi, le diamètre d'une demi-lune, et par là-même de la structure cylindrique formée par les deux demi-lunes L1, L2 est au moins égal à 4 millimètres.

En outre, dans le corps principal 1 est formé un trou débouchant 4 pour permettre de faire passer le thermocouple fluide DF dans ledit corps principal jusqu'à l'intérieur de la canalisation. Le diamètre du thermocouple DF étant typiquement de 0,5 millimètre, le trou 4 doit avoir un diamètre au moins égal à 0,5 millimètre.

Ainsi il a été déduit que le diamètre extérieur du corps principal 1 et donc du dispositif de mesure doit être au moins égal à 6 millimètres.

Pour résumer, les caractéristiques d'un tel dispositif de mesure de température pour un système de détermination de coefficient d'échange thermique sont généralement les suivantes :

- le diamètre (ou l'épaisseur) du dispositif est au moins de 6 mm ;
- les thermocouples de paroi comprennent chacun deux fils, le diamètre de chaque fil étant au moins de 25 $\mu$m ;
- le thermocouple fluide présente généralement un diamètre d'au moins 0,3 mm voire d'au moins 0,5 mm.

En outre, le matériau du corps principal est identique ou similaire à celui de la paroi pour avoir sensiblement le même comportement thermique (même conductivité et même diffusivité) que la paroi.

Un tel dispositif aussi épais ne peut donc s'installer que dans des tuyauteries épaisses et nécessite généralement de percer la paroi et/ou de réaliser un bossage sur la paroi pour l'installer.

La fabrication d'un tel dispositif est généralement réalisée à l'unité avec des opérations minutieuses : usinage, soudage des fils des thermocouples, soudage d'étanchéité... Un tel dispositif ne se prête pas à une fabrication en grande série. Le délai de fabrication est généralement élevé et son coût de fabrication est également élevé (de l'ordre de 10 k€).

En outre, la température de tenue d'un tel dispositif est inférieure ou égale à 700°C.

Il est recherché une réduction importante des dimensions d'un dispositif de détermination de coefficient d'échange thermique, et notamment la réduction de son épaisseur afin de pouvoir faire des mesures dans des parois fines, exiguës et de petites dimensions, de préférence sans avoir à modifier la paroi (notamment sans perçage ou bossage sur la paroi), et ce, tout en conservant la même précision de mesure que pour un système de détermination de coefficient d'échange thermique tel que précédemment décrit, voire en l'améliorant.

Et de préférence, il est recherché un tel dispositif de détermination de coefficient d'échange thermique qui puisse doit tenir à une température supérieure à 700°C.

La demande de brevet EP3106852A1 décrit un capteur de flux thermique à l'échelle millimétrique, qui est chimiquement et thermiquement résistant, mécaniquement robuste et de faible inertie thermique. Le capteur de flux thermique est constitué de matériaux thermoélectriques superposés l'un sur l'autre avec des jonctions thermoélectriques entre les couches de matériaux thermoélectriques. En outre, à chaque jonction thermoélectrique, des fils conducteurs permettent d'acquérir des signaux électriques de chaque jonction thermoélectrique indépendamment l'une de l'autre, les signaux de jonction thermoélectrique électrique acquis pouvant être transmis au dispositif de traitement de données pour déterminer des données de flux thermique. Les matériaux thermoélectriques présentent des coefficients Seebeck différents entre eux, de sorte à former des jonctions thermoélectriques de thermocouple.

D'une part, cette demande de brevet ne décrit pas un capteur de coefficient d'échange thermique, dans la mesure où elle ne prévoit pas de mesure dans un fluide. A fortiori, ce capteur n'est donc pas conçu pour réaliser des mesures en dynamique fluide, c'est-à-dire avec un débit de fluide dans une canalisation. D'autre part, cette demande de brevet vise à former des thermocouples certes de taille millimétrique, mais qui sont connus pour présenter une faible sensibilité, de l'ordre de 40 $\mu$V/°C, ce qui nécessite d'amplifier le signal.

L'invention vise à surmonter les inconvénients précités de l'art antérieur.

Plus précisément, l'invention vise à disposer d'un système de détermination de coefficient d'échange thermique de taille millimétrique voire inférieure au millimètre, qui puisse notamment être installé sur une paroi fine (épaisseur de l'ordre du millimètre, par exemple entre 1 et 5 mm, voire entre 1 et 3 mm, ou encore entre 1 et 2 mm), tout en conservant la même précision de mesure, voire en l'améliorant. Il est recherché un système de détermination de coefficient d'échange thermique qui ne nécessite pas une intégration intrusive (mécaniquement et thermiquement) dans une paroi ou plus largement dans un support.

Il est recherché également un tel système qui puisse être installé sur une grande variété de supports. Les supports visés ne se limitent pas à une paroi de tuyauterie pour fluide et, sans que cela soit limitatif, peuvent être : des parois d'échangeurs, des structures métalliques (dans l'industrie), des murs ou parois pour évaluer les déperditions énergétiques (dans l'habitat et les bâtiments publics), des vêtements par exemple des vêtements dits « intelligents » pour des mesures de régulation d'échange (sport, armée). On cherche également à pouvoir mesurer quantitativement en termes de puissance (perdue ou acquise) l'effet de température ressentie sur la peau d'une personne (météo).

Par exemple, on cherche à mesurer les transferts de chaleur dans un échangeur de chaleur afin d'évaluer les performances thermiques en local et permettre de mieux préciser les zones où le transfert de chaleur n'est pas optimal et peut être amélioré. Les parois caractéristiques dédiées aux échanges thermiques dans les échangeurs peuvent présenter une faible épaisseur, de l'ordre du millimètre, par exemple entre 1 et 5 mm, voire entre 1 et 3 mm ou encore entre 1 et 2 mm.

Il est recherché un système de détermination de coefficient d'échange thermique qui puisse de préférence tenir à une température supérieure à 700°C, typiquement comprise entre 700°C et 1000°C.

Il est recherché une bonne précision de mesure, autant en statique qu'en dynamique fluide.

Il est en outre recherché un système de détermination de coefficient d'échange thermique qui soit simple et rapide à fabriquer, de faible coût et qui soit fabri-cable en série.

## Exposé de l'invention

Un premier objet de l'invention est un système de détermination de coefficient d'échange thermique entre un fluide et un support en une surface du support en contact avec le fluide, caractérisé en ce qu'il comprend un dispositif de mesure de température s'étendant selon une direction longitudinale et comprenant :

- une structure multicouche comportant :

  -- au moins quatre couches minces en céramique, et
  -- au moins trois pistes métalliques, chaque piste étant positionnée entre deux couches minces et étant intégrée dans l'épaisseur d'une des deux couches ;

    chaque piste étant apte à être reliée à un moyen d'alimentation électrique et à un moyen de mesure de résistance, de sorte à former une sonde résistive apte à mesurer une température $T_{P1}$, $T_{P2}$, $T_{P3}$ en un plan de mesure,
    les pistes métalliques formant ainsi une pluralité de plans de mesure parallèles entre eux et sensiblement alignés selon la direction perpendiculaire à la surface du support ; et

- une sonde résistive de température attachée à la structure multicouche et destinée à être en contact avec le fluide de manière à mesurer une température de fluide $T_F$ ;

le système comprenant en outre un calculateur comportant :

- des premiers moyens pour calculer, à partir des valeurs de température $T_{P1}$, $T_{P2}$, $T_{P3}$ mesurées par les au moins trois pistes métalliques, une valeur de température moyenne de paroi $T_P$ et une densité de flux thermique $\varphi$ ; et
- des seconds moyens pour calculer, à partir de la température de fluide $T_F$, de la température moyenne de paroi $T_P$ et de la densité de flux thermique $\varphi$, un coefficient d'échange thermique h.

Selon l'invention, une couche mince est définie comme étant une couche dont l'épaisseur est de l'ordre de la centaine à quelques centaines de micromètres, par exemple comprise entre 100 et 300 $\mu$m.

La structure multicouche est destinée à être en contact avec le support, et plus précisément avec la surface du support qui est en contact avec le fluide.

Ainsi, l'invention permet de disposer d'un système de détermination de coefficient d'échange thermique de taille millimétrique voire inférieure au millimètre, qui peut notamment être installé sur une paroi fine, et plus largement sur une grande variété de supports. Le dispositif de mesure pouvant être simplement fixé sur un support, par exemple collé ou adhéré audit support, il permet d'éviter une intégration intrusive mécaniquement. Les couches en céramique peuvent en outre être en des matériaux adaptés pour limiter l'intrusivité thermique.

En outre, le dispositif de mesure de la température étant principalement en céramique, la température de tenue du dispositif de mesure peut dépasser les 700°C.

De préférence, au moins une piste métallique est configurée pour former au moins une sonde résistive à haute sensibilité, correspond à une sensibilité supérieure ou égale à 0,3 $\Omega$/°C, et étant de préférence supérieure ou égale à 1,3 $\Omega$/°C.

De préférence, au moins une piste métallique peut être configurée pour former une résistance initiale $R(T_0)$ supérieure ou égale à 300 $\Omega$. Cela permet d'agir sur la sensibilité de mesure de température.

La structure multicouche peut comprendre plus de quatre couches minces en céramique, et plus de trois pistes métalliques, chaque piste étant positionnée entre deux couches minces et étant intégrée dans l'épaisseur d'une des deux couches.

Au moins une piste métallique peut être en platine, en argent, en nickel, ou en un alliage métallique.

De préférence, les différentes pistes sont en un même matériau, de préférence choisis selon l'un ou plusieurs des matériaux cités ci-dessus. Cela permet notamment de faciliter la fabrication du dispositif.

Alternativement, les différentes pistes peuvent être en des matériaux métalliques différents, de préférence choisis selon l'un ou plusieurs des matériaux cités ci-dessus.

Au moins une couche mince céramique est en alumine ($Al_2O_3$), en zircone ($ZrO_2$), en un composite alumine/zircone, en nitrure d'aluminium (AlN), en nitrure de silicium ($Si_3N_4$) ou en oxyde de béryllium (BeO). De tels matériaux permettent généralement de minimiser les effets thermiques de la présence du dispositif de mesure (limiter au maximum l'intrusivité thermique), notamment lorsque le support est un inox.

De préférence, les différentes couches céramiques sont toutes en le même matériau, notamment en un des matériaux cités ci-dessus, afin de faciliter la fabrication du dispositif et avoir un meilleur comportement thermique.

Alternativement, les différentes couches céramiques peuvent être en des matériaux céramiques différents, notamment en plusieurs des matériaux cités ci-dessus.

Selon un mode de réalisation préféré, au moins une couche mince en céramique présente une épaisseur inférieure ou égale à 300 $\mu$m, de préférence inférieure ou égale à 200 $\mu$m, et de préférence toutes les couches minces en céramique.

En particulier, la couche mince en céramique destinée à être en contact avec la surface du support présente de préférence une épaisseur d'au moins 150 $\mu$m.

Selon un mode de réalisation, au moins une extrémité de la structure multicouche dans la direction longitudinale est prolongée par une forme de biseau permettant de réduire progressivement l'épaisseur de ladite structure au niveau de ladite extrémité, de préférence l'extrémité destinée à faire face au débit de fluide.

Selon un mode de réalisation particulier, les deux extrémités de la structure multicouche sont prolongées par une forme de biseau dans la direction longitudinale, correspondant à la direction de circulation du fluide.

Selon un mode de réalisation, le système comprend au moins un moyen d'alimentation électrique et au moins un moyen de mesure de résistance connectés à chaque piste métallique, et de préférence à la sonde résistive de température fluide.

Selon un mode de réalisation particulier, chaque piste métallique est connectée d'une part au moyen d'alimentation électrique via un circuit d'alimentation et d'autre part au moyen de mesure de la résistance via un circuit de mesure au moyen d'alimentation électrique, de manière à former ainsi un montage 4 fils.

## Brève description des figures

D'autres caractéristiques et avantages de l'invention apparaîtront à l'aide de la description qui suit, donnée à titre illustratif et non limitatif, faite en regard des figures annexées parmi lesquelles

[Fig. 1] illustre un système de détermination du coefficient d'échange thermique de l'art antérieur.

[Fig.2A] et

[Fig.2B] illustrent un dispositif de mesure de température particulier compris dans un système de détermination du coefficient d'échange thermique de l'art antérieur.

[Fig.3] illustre schématiquement un dispositif de mesure de température compris dans un système de détermination du coefficient d'échange thermique selon l'invention.

[Fig.4A],

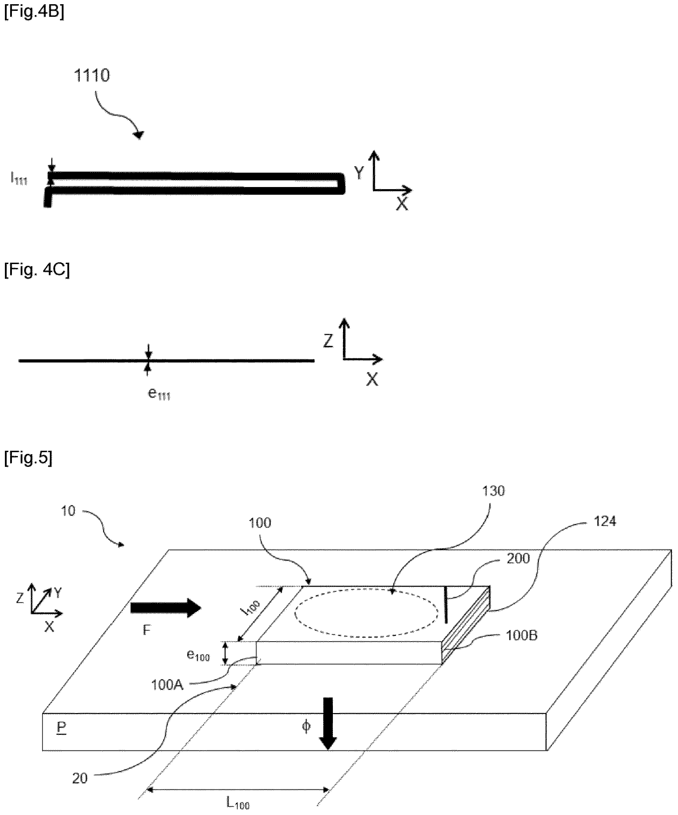

[Fig.4B] et

[Fig. 4C] illustrent un exemple de piste métallique formant une sonde résistive d'un dispositif de mesure de température compris dans un système de détermination du coefficient d'échange thermique selon l'invention.

[Fig.5] illustre un premier mode de réalisation d'un dispositif de mesure de température compris dans un système de détermination du coefficient d'échange thermique selon l'invention

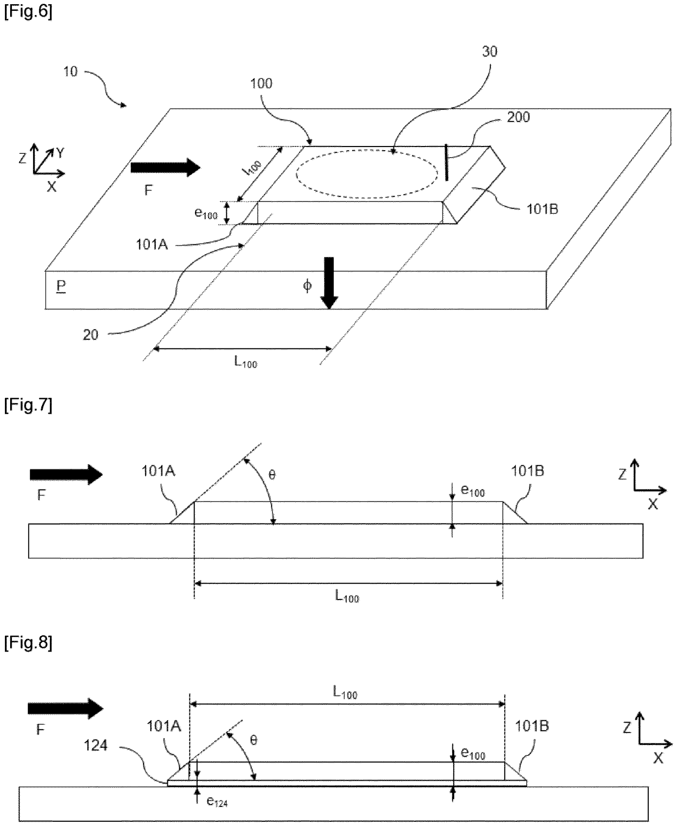

[Fig.6] illustre un deuxième mode de réalisation d'un dispositif de mesure de température compris dans un système de détermination du coefficient d'échange thermique selon l'invention.

[Fig.7] illustre une première variante du deuxième mode de réalisation.

[Fig.8] illustre une deuxième variante du deuxième mode de réalisation.

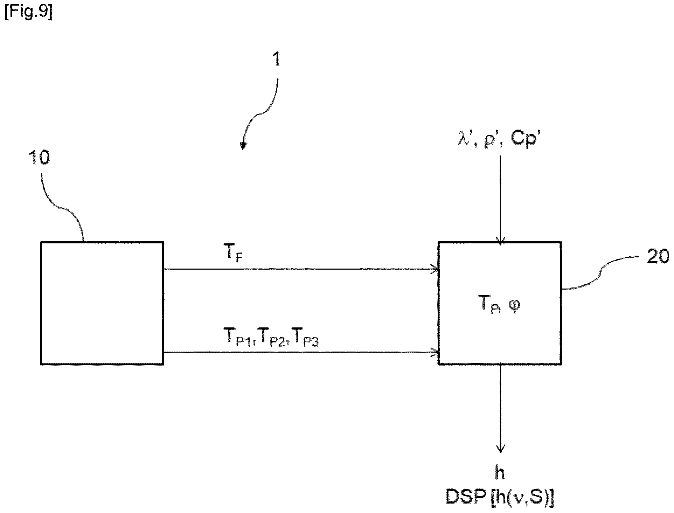

[Fig.9] représente un schéma de principe d'un système de mesure du coefficient d'échange thermique conforme à l'invention.

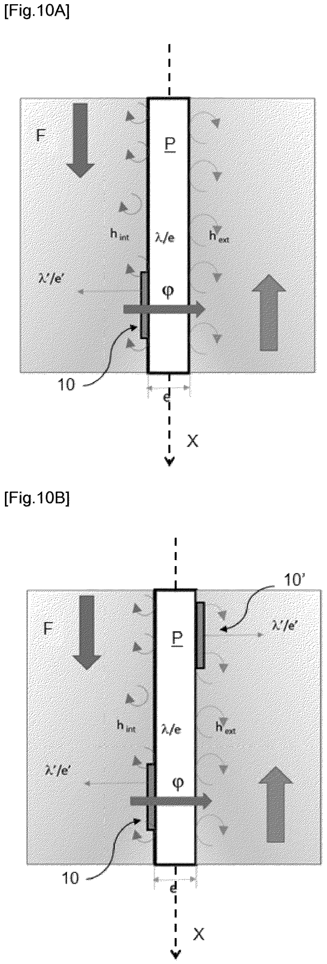

[Fig.10A] et

[Fig. 10B] illustrent un premier exemple de configuration d'utilisation d'un système de mesure du coefficient d'échange thermique conforme à l'invention.

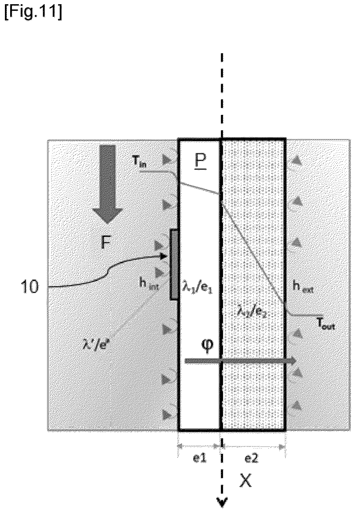

[Fig. 11] illustre un deuxième exemple de configuration d'utilisation d'un système de mesure du coefficient d'échange thermique conforme à l'invention

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## Description détaillée de l'invention

Les figures 1 à 2B ont été décrites dans la partie « Etat de la technique » de la présente description et ne seront pas reprises ici.

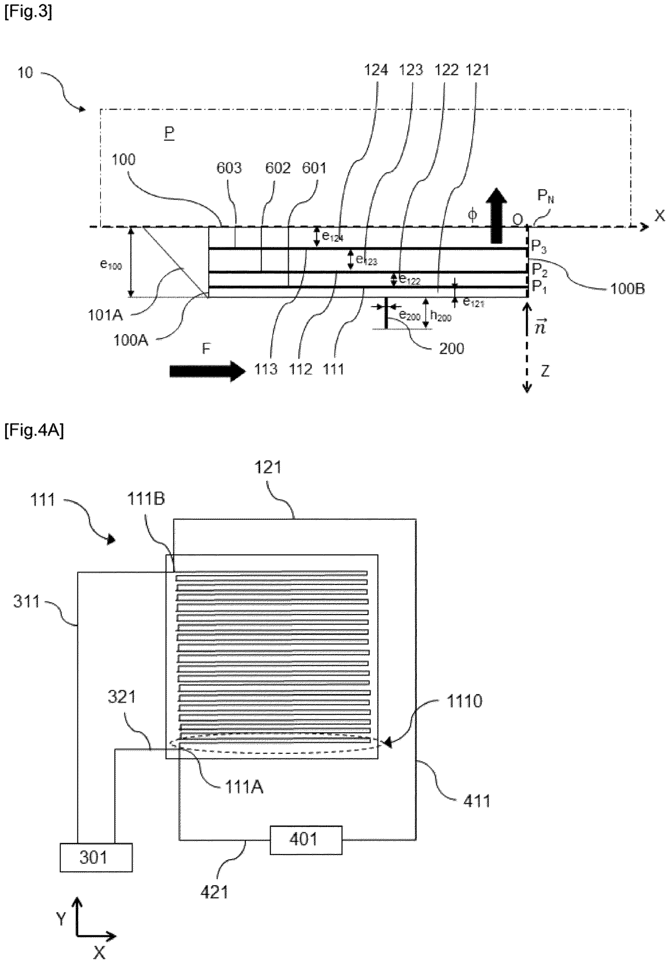

Dans les figures 3 à 8 illustrent plusieurs modes de réalisation et variantes d'un dispositif de mesure de température compris dans un système de détermination du coefficient d'échange thermique selon l'invention. Chacun des modes et variantes peut former un système de détermination du coefficient d'échange thermique en intégrant un calculateur 20 (représenté en figure 9) adapté pour calculer une valeur de température $T_p$ de la paroi et une densité de flux thermique $\varphi$ puis un coefficient d'échange thermique h, et ce, à partir des valeurs de températures mesurées en les trois plans de mesure et dans le fluide, comme expliqué plus après.

En outre, les figures 3 à 8 sont illustrées en référence à une paroi, par exemple une paroi de canalisation ou une paroi d'échangeur. Alternativement à une paroi, le dispositif peut être assemblé à tout autre support adapté à la détermination d'un coefficient d'échange entre ledit support et un fluide.

La figure 3 illustre schématiquement un dispositif de mesure de température compris dans un système de détermination du coefficient d'échange thermique selon l'invention. Le dispositif de mesure est disposé sur une paroi intérieure P d'une canalisation. Un fluide circule à l'intérieur de la canalisation. L'épaisseur de la paroi peut être de quelques millimètres, par exemple entre 1 à 5 mm, voire entre 1 à 3 mm, voire entre 1 et 2 mm. Alternativement, l'épaisseur de la paroi peut être d'une dizaine de millimètres ou davantage, et ce, selon l'application visée.

Le dispositif de mesure de température 10 est illustré selon une coupe longitudinale dans un plan de référence XZ. La direction longitudinale X correspond à la direction principale d'écoulement du fluide F et la direction Y est la direction transversale. La direction Z perpendiculaire au plan XY correspond à la direction du flux thermique $\Phi$ dans la paroi P et dans le dispositif 10.

Le dispositif de mesure de température comprend une structure multicouche 100, qui est illustrée sous une forme parallélépipédique non limitative, et qui comporte :

- quatre couches minces 121, 122, 123, 124 en céramique ; et
- trois pistes métalliques 111, 112, 113;

chaque piste étant positionnée entre deux couches minces en céramique, et étant intégrée dans l'épaisseur d'une des deux couches.

La structure illustrée comprend trois pistes métalliques et quatre couches minces.

Alternativement, la structure multicouche peut comprendre plus de trois pistes métalliques, et dans ce cas plus de quatre couches minces. Ceci permet d'améliorer la connaissance et/ou la précision de mesure du coefficient d'échange en dynamique, et également pour vérifier la direction axiale du flux de chaleur (selon la direction perpendiculaire Z) par comparaison à la loi de comportement de la pénétration de la chaleur (loi de Fourier) et détecter d'éventuels flux de chaleur parasites.

La couche céramique la plus proche de la paroi (pouvant former une couche de contact avec la paroi), désignée « couche intérieure », est la couche 124.

La couche céramique la plus éloignée de la paroi (ou la plus proche du fluide), désignée « couche extérieure », est la couche 121.

Les différentes couches en céramique n'ont pas nécessairement les mêmes épaisseurs (dimension selon Z). Les épaisseurs $e_{121}$, $e_{122}$, $e_{123}$, $e_{124}$ des couches céramiques varient typiquement entre 100 et 300 $\mu$m, de préférence entre 100 et 200 $\mu$m. La couche intérieure 124 présente généralement une épaisseur $e_{124}$ d'au moins 150 $\mu$m.

L'épaisseur des couches permet de définir les distances entre les pistes métalliques 111, 112, 113 et donc les différents plans de mesure $P_1$, $P_2$ et $P_3$.

De préférence, la (ou les) céramique(s) sélectionnées pour former les couches minces ont une conductivité $\lambda$' et/ou une diffusivité $\alpha$' proche(s) de la conductivité $\lambda$ et/ou la diffusivité $\alpha$ de la paroi afin de minimiser les effets thermiques de la présence du dispositif de mesure (limiter au maximum l'intrusivité thermique). Il peut s'agir de l'alumine ($Al_2O_3$), de la zircone ($ZrO_2$), d'un composite alumine/zircone, du nitrure d'aluminium (AlN), du nitrure de silicium ($Si_3N_4$), de l'oxyde de béryllium BeO, notamment lorsque la paroi est en inox.

De préférence, les différentes couches céramiques sont toutes en le même matériau, notamment en un des matériaux cités ci-dessus, afin de faciliter la fabrication du dispositif et avoir un meilleur comportement thermique.

Alternativement, les différentes couches céramiques peuvent être en des matériaux céramiques différents, notamment en plusieurs des matériaux cités ci-dessus.

Chaque piste métallique est connectée à un moyen d'alimentation électrique et à un moyen de mesure de la résistance, de manière à former une sonde résistive de température. Les connexions électriques ne sont pas représentées sur la figure 3 mais un exemple de connexion électrique est visible dans la figure 4A et décrit plus après.

Chaque piste métallique 111, 112, 113 forme un plan de mesure $P_1$, $P_2$, $P_3$, les plans de mesure étant parallèles entre eux (par rapport au plan de référence XY) et alignés selon la direction Z perpendiculaire au plan XY Selon l'invention, le terme « aligné » signifie que les pistes sont décalées entre elles uniquement selon la direction Z, qu'il n'y a pas de décalage entre les pistes dans les directions X et Y

Les pistes métalliques permettent de réaliser des mesures de température représentatives de la paroi, qui peuvent être désignées « températures paroi » par la suite, en les différents plans de mesure.

L'intersection des plans de mesure $P_1$, $P_2$ et $P_3$ et de la surface $P_N$ de la paroi avec une droite normale $\vec{n}$ au plan XY forme des points alignés.

Chaque piste métallique agit comme une résistance sensible à la température, dont la variation est donnée par la loi :

[Math.1]
$$R(T) = R(T_0) \times \big(1 + \alpha(T - T_0)\big) = R(T_0) + R(T_0) \times \alpha(T - T_0)$$

où a est le coefficient de température du matériau conducteur métallique constituant la piste.

En mesurant la résistance R(T) et en connaissant la résistance initiale $R(T_0)$ donnée pour une température initiale $T_0$, on en déduit la différence de température $\Delta T$ correspondant à $T-T_0$.

De préférence, au moins une piste métallique est configurée pour former une sonde résistive de température à haute sensibilité. Pour cela, on peut agir sur le matériau, la longueur et/ou la section de la piste métallique. Ceci permet de compenser la faible épaisseur du dispositif, et notamment les faibles distances entre les plans de mesure.

La sensibilité d'un capteur de température permet de caractériser la valeur de la grandeur de sortie dudit capteur en fonction de la température à mesurer. Dans le cas d'une sonde résistive de température, la grandeur de sortie est la variation de la résistance, et la sensibilité est définie comme étant la variation de la résistance (ou variation ohmique) en fonction d'une variation de température. La sensibilité est fonction du coefficient de température (plus $\alpha$ est grand, plus l'impact d'un $\Delta T$ sur la variation de résistance sera grand) mais aussi de la résistance initiale $R(T_0)$.

Pour une sonde résistive de température, selon l'invention, une haute sensibilité correspond à une sensibilité supérieure ou égale à 0,3 $\Omega$/°C.

De préférence, au moins une piste métallique a une sensibilité supérieure ou égale à 1,3 $\Omega$/°C.

De préférence, au moins une piste métallique est configurée pour former une résistance initiale $R(T_0)$ supérieure ou égale à 300 $\Omega$.

La combinaison de sondes résistives de température à haute sensibilité avec des caractéristiques adaptées des couches en céramique (matériau, épaisseur ...) permet encore plus de compenser l'épaisseur réduite du dispositif et notamment les distances réduites entre les plans de mesure.

En outre, la discrétisation des mesures de température, mise en oeuvre dans un algorithme de mesure implémenté dans le calculateur 20 et rendue possible par des systèmes d'acquisition avec des codages à 16 bit ou 24 bit, associée à la haute sensibilité des pistes et aux caractéristiques des couches en céramique permettent d'améliorer encore plus la sensibilité de mesure. Par exemple, avec de tels codages, la discrétisation de la température permet de détecter de très faibles variations de température exactement comme celle pouvant exister entre $P_1$ et $P_2$. A titre d'exemple sur une pleine échelle de 400°C, une discrétisation à 16 bit permet de détecter un écart de température de : $400/2^{16}$ soit 0,006°C (400/65636).

Un matériau métallique adapté à l'obtention de sondes résistives de température à haute sensibilité est le platine (Pt), qui a un coefficient de température $\alpha$ élevé (3,85. $10^{-3}$ $\Omega$/°C) et une résistivité $\rho$ élevée (de l'ordre de 100.$10^{-9}$ $\Omega$.m à température ambiante).

On cherche à obtenir une piste en platine ayant une résistance élevée, par exemple sensiblement égale à 1000 $\Omega$ (du type PT1000), de sorte que le terme $R(T_0) \times \alpha$ soit égal à 3,85 $\Omega$/°C, ce qui permet d'obtenir une très haute sensibilité de mesure de température.

On peut obtenir une valeur de résistance donnée en jouant sur la longueur totale $L_{111}$ de la piste et/la section $S_{111}$ de la piste, la résistance étant déterminée par la formule :

[Math.2]
$$R(T_0) = \rho \times \frac{L_{111}}{S_{111}}$$

D'autres matériaux que le platine peuvent être utilisés tels que l'argent (Ag), le nickel (Ni), ou un alliage métallique.

De préférence, les différentes pistes sont en un même matériau, de préférence choisis selon l'un ou plusieurs des matériaux cités ci-dessus.

Alternativement, les différentes pistes sont en des matériaux métalliques différents, de préférence choisis selon l'un ou plusieurs des matériaux cités ci-dessus.

Les figures 4A, 4B (vue de dessus selon le plan XY) et 4C (vue de côté selon le plan YZ) illustrent un exemple de piste métallique 111 permettant de former une sonde résistive de température. La piste métallique se présente sous la forme d'un fil continu en forme de serpentin, formant une résistance en serpentin, comprenant une série de plusieurs méandres 1110 reliés entre eux. Cette configuration est représentée de manière schématique, et a pour objectif d'en comprendre le principe. Des configurations plus ou moins complexes peuvent être prévues. Les extrémités des pistes peuvent être disposées à d'autres endroits que sur les coins.

Le fil continu présente une largeur $l_{111}$ (dimension selon Y) et une épaisseur $e_{111}$ (dimension selon Z) formant une section $S_{111}$ égale à $e_{111} * l_{111}$ par exemple de 100 $\mu$m * 4 $\mu$m soit 0,4.$10^{-9}$ m². Avec la résistivité du platine de l'ordre de 100.$10^{-9}$ $\Omega$.m, on voit qu'il faut une longueur totale $L_{111}$ de piste de 4 mètres pour former une résistance de 1000$\Omega$.

Il peut être difficile de former une résistance de 1000$\Omega$ dans certaines configurations, notamment pour un dispositif de mesure de très petite taille. Aussi on peut viser des résistances moindres, par exemple entre 700 et 800$\Omega$, voire moins.

En outre, la piste métallique 111 est reliée à un moyen d'alimentation électrique 301 et à un moyen de mesure 401 de la résistance par un montage 4 fils, qui est un montage plus précis qu'un montage 2 ou 3 fils connu pour la mesure d'une résistance. En d'autres termes, chacune des deux extrémités 111A, 111B de la résistance en serpentin est reliée d'une part au moyen d'alimentation électrique 301 via un circuit d'alimentation 311, 321 et d'autre part au moyen de mesure 401 de la résistance via un circuit de mesure 411, 421, c'est-à-dire par deux circuits distincts. Le moyen de mesure est typiquement un voltmètre dont l'impédance est très élevée de sorte qu'il ne perturbe pas ou peu la mesure de la résistance et le voltmètre est connecté aux bornes de la résistance pour minimiser au mieux la résistance du circuit de mesure. Un montage 4 fils de chaque piste métallique permet donc avantageusement d'améliorer la précision de mesure de la résistance et donc de la température.

Du fait des faibles épaisseurs des couches en céramique, et chaque piste métallique étant intégrée dans l'épaisseur d'une couche céramique, la structure multicouche peut présenter une épaisseur très réduite, d'un millimètre ou moins. A titre d'exemple, l'épaisseur $e_{100}$ de la structure multicouche 100 peut être de 0,6 millimètre (par exemple avec 4 couches de 150 $\mu$m chacune).

Les autres dimensions (largeur $l_{100}$ et longueur $L_{100}$) de la structure multicouche 100 peuvent être de l'ordre de la dizaine de millimètres à quelques dizaines de millimètres. Par exemple, la structure multicouche peut présenter une largeur $l_{100}$ de 10 mm et une longueur $L_{100}$ de 20 mm ou une largeur $l_{100}$ de 16 mm et une longueur $L_{100}$ de 32 mm.

L'épaisseur réduite de la structure multicouche et par là même du dispositif de mesure de température, permet de disposer le dispositif sur des parois de faible épaisseur (quelques millimètres) et/ou dans des zones exiguës. En outre, cela permet d'éviter toute intrusivité mécanique du dispositif dans la paroi afin notamment d'en garantir l'intégrité, et de limiter les biais thermiques. L'intégration du dispositif peut se faire sans qu'aucune modification de la paroi ne soit nécessaire. Le dispositif peut par exemple être simplement collé sur la paroi, avec une colle adaptée pour tenir aux températures d'utilisation du dispositif (pouvant atteindre 1000°C), par exemple une colle en alliage céramique zircone (de quelques micromètres d'épaisseur), ou à l'aide d'un adhésif adapté.

La première extrémité 100A de la structure multicouche 100, qui est celle faisant face au débit de fluide, peut être prolongée par une forme en biseau 101A, qui permet de réduire progressivement l'épaisseur de ladite structure au niveau de cette extrémité et qui en outre est exempte de pistes métalliques, et peut également être exemple de couches céramiques. Cette forme en biseau a pour effet de réduire les turbulences à l'interface fluide/dispositif, turbulences ayant une influence directe sur le coefficient d'échange. Une telle forme biseautée permet de limiter l'effet de la singularité de l'extrémité de la structure multicouche (bord d'attaque), qui est déjà limitée du fait de la faible épaisseur de cette structure. Une forme biseautée peut être prévue également au niveau de la seconde extrémité 100B.

Le dispositif de mesure de température 10 comprend en outre une sonde résistive de température 200, dite « sonde fluide », destinée à être en contact avec le fluide. La sonde fluide est assemblée à la couche céramique extérieure 101, par exemple soudée ou brasée.

La sonde fluide 200 est de préférence en platine (Pt). Elle peut être en le même matériau que l'une des pistes métalliques ou en un matériau différent.

A titre d'exemple, la sonde fluide peut présenter une hauteur $h_{200}$ (dimension selon Z) de quelques millimètres, par exemple 2 mm et une épaisseur $e_{200}$ (dimension selon X) d'un millimètre ou moins, par exemple 0,9 mm.

Bien que cela ne soit pas représenté, la sonde fluide est également reliée à un moyen d'alimentation électrique et à un moyen de mesure de la résistance, de préférence par un montage 4 fils.

A titre d'exemple, la sonde fluide peut être une sonde en platine ayant une résistance de 100 $\Omega$ (PT100).

L'homme du métier saura réaliser une structure multicouche en utilisant une technique de cofrittage à haute température (HTCC pour « High Température Cofired Ceramic ») ou basse température LTCC pour « Low Température Cofired Ceramic »), en intégrant les pistes métalliques entre les couches céramiques, lesdites pistes étant métallisées en utilisant les vias traversant les couches céramiques. Une telle technique est connue dans le domaine de la microélectronique (MEMS notamment).

Un tel recours à la technique des couches minces en céramique cofrittées à basse ou haute température, technique proche de la technologie des MEMS, permet de fabriquer une plaque ou « wafer » contenant un grand nombre de structures (typiquement une cinquantaine de structures par plaque). La plaque peut ainsi être découpée pour former plusieurs structures multicouches. Chaque structure peut ensuite être usinée, percée pour les passages des connexions électriques et/ou brasée/soudée pour l'intégration de la sonde fluide. Cela permet de réduire le coût de fabrication unitaire d'un dispositif et de réduire également le délai de fabrication.

La figure 5 illustre un premier mode de réalisation d'un dispositif de mesure de température compris dans un système de détermination du coefficient d'échange thermique selon l'invention.

La figure 6 illustre un deuxième mode de réalisation d'un dispositif de mesure de température compris dans un système de détermination du coefficient d'échange thermique selon l'invention.

Les dispositifs selon les premier et deuxième modes de réalisation comprennent chacun une structure multicouche 100 ainsi qu'une sonde fluide 200 telle que celles décrites en lien avec la figure 3. Dans les figures 5 et 6, est identifiée une zone 130 de mesure des températures paroi par les pistes métalliques qui correspond à une zone centrale dans la structure multicouche, zone dans laquelle les mesures de températures ne sont pas impactées par les effets de bord de la structure.

Dans les dispositifs selon les premier et deuxième modes de réalisation, la couche céramique intérieure 124, qui est la plus proche de la paroi P, forme une couche de contact avec ladite paroi. L'épaisseur de cette couche intérieure est au moins de 150 $\mu$m. Toutes les couches céramiques, y compris cette couche intérieure, ont les mêmes dimensions dans le plan, c'est-à-dire les mêmes longueurs et largeurs et sont alignées les unes au-dessus des autres selon la direction Z.

La couche céramique intérieure 124 peut également être utilisée pour acheminer les circuits électriques des sondes résistives de température (pistes métalliques et sonde fluide). La couche céramique intérieure 124 est assemblée à la paroi, par exemple par collage à l'aide d'une colle adaptée pour tenir aux températures d'utilisation du dispositif ou encore à l'aide d'un système adhésif adapté aux températures d'utilisation du dispositif.

Le deuxième mode de réalisation diffère du premier mode de réalisation en ce que les première et seconde extrémités 100A, 100B de la structure multicouche 100 selon la direction longitudinale X sont prolongées par une forme de biseau 101A, 101B permettant de réduire progressivement l'épaisseur de ladite structure au niveau de ces deux extrémités. Les pistes métalliques ne sont pas prolongées dans cette partie en biseau, qui peut également être exemple de couches céramiques. Comme décrit précédemment, cette forme en biseau a pour effet de réduire les turbulences à l'interface fluide/dispositif, turbulences pouvant avoir une influence sur la détermination du coefficient d'échange. Une telle forme biseautée permet de limiter l'effet de la singularité de l'extrémité de la structure (bord d'attaque), qui est déjà limitée du fait de la faible épaisseur de cette structure.

La figure 7 illustre une première variante du deuxième mode de réalisation dans laquelle les extrémités prolongées en forme de biseau 101A, 101B sont biseautées sur toute l'épaisseur de la structure multicouche 100. La forme en biseau peut être obtenue par un surplus de colle, par exemple la colle utilisée pour assembler la structure multicouche 100 à la paroi. Alternativement, la forme en biseau peut être formée lors de la fabrication de la structure multicouche ou lors du découpage des structures multicouche dans une plaque (ou wafer).

La figure 8 illustre une deuxième variante du deuxième mode de réalisation dans laquelle les extrémités prolongées en forme de biseau 101A, 101B sont biseautées à partir de la couche en céramique intérieure 124. Comme pour la première variante, la forme en biseau peut être obtenue par un surplus de colle ou peut être formée lors de la fabrication de la structure multicouche ou lors du découpage des structures multicouche dans une plaque (ou wafer).

Dans chacune des deux variantes, l'angle $\theta$ du biseau peut varier entre 45 et 60°.

La figure 9 représente un schéma de principe d'un système 1 de détermination de coefficient d'échange thermique. Le système de détermination du coefficient d'échange thermique comprend un dispositif de mesure de température 10 conforme à l'invention et un calculateur 20 qui implémente un algorithme de calcul configuré pour calculer le coefficient d'échange thermique à partir des mesures de température délivrées par le dispositif de mesure 10 et de données telles que la conductibilité thermique $\lambda'$, la masse volumique $\rho'$, et/ou la capacité thermique $Cp'$ du dispositif de mesure.

Nous allons maintenant décrire les principes de cet algorithme.

Préalablement à la mesure des températures paroi, il est généralement procédé à une étape de calibration des sondes résistives formées par les pistes métalliques. Comme il y a au moins 3 pistes métalliques permettant de disposer d'au moins 3 plans de mesure distincts et parallèles entre eux, une telle calibration peut être réalisée avec les seuls éléments constituant le dispositif, c'est-à-dire sans qu'il soit nécessaire d'ajouter des éléments extérieurs : on parle alors d'auto-calibration. Nous allons décrire le principe de cette étape d'auto-calibration avec 3 pistes métalliques, étant entendu que celle-ci peut être réalisée avec plus de 3 pistes métalliques.

Pour la mesure, les sondes résistives de température sont généralement alimentées sous une tension réduite ne provoquant pas d'auto-échauffement par effet Joule des résistances, afin d'éviter qu'un échauffement des résistances ne vienne augmenter indûment lesdites résistances et ainsi fausser les mesures des températures paroi.

Cependant, pour l'étape de calibration, on peut alimenter la résistance du plan médian $P_2$ à l'aide d'une tension supérieure à celle utilisée pour la mesure de manière à obtenir un effet Joule et vérifier les réponses de cette élévation de température sur les résistances des plans $P_1$ et $P_3$. Les profils des réponses des sondes résistives des plans $P_1$ et $P_3$ permet de détecter d'éventuels problèmes de contact entre une sonde résistive et la céramique, ou de vérifier que les distances entre les plans n'ont pas évolué.

Ainsi, le fait d'avoir 3 sondes résistives pour la mesure des températures paroi a cet avantage de pouvoir réaliser une auto-calibration en agissant uniquement sur la tension d'alimentation des résistances.

Il est procédé ensuite aux mesures des températures paroi et aux mesures de température fluide.

A un instant t, le dispositif de mesure de température 10 fournit une mesure de température de fluide $T_F$ délivrée par la sonde fluide 200 et au moins trois mesures de température $T_{P1}$, $T_{P2}$ et $T_{P3}$ en trois plans de mesure $P_1$, $P_2$ et $P_3$ délivrées par les pistes métalliques respectives 111, 112 et 113.

On considère une droite normale $\vec{n}$ correspondant sensiblement à la direction Z, comme représentée dans la figure 3, mais dont le sens est dirigé depuis le fluide F vers la paroi P. L'intersection des plans de mesure $P_1$, $P_2$ et $P_3$ avec cette droite normale forme des points sensiblement alignés selon la direction Z, correspondant à une même abscisse x selon la direction X telle que représentée dans la figure 3.

Les températures $T_F(t, x)$, $T_{P1}(t, x)$, $T_{P2}(t, x)$ et $T_{P3}(t, x)$ sont transmises au calculateur 20.

A partir des températures $T_{P1}(t, x)$, $T_{P2}(t, x)$ et $T_{P3}(t, x)$, le calculateur 20 calcule la température de paroi $T_P(t, x)$ par une méthode de conduction inverse telle que la méthode de Beck, et calcule également la densité de flux thermique $\varphi(t, x)$. Les températures $T_F(t, x)$, $T_{P1}(t, x)$, $T_{P2}(t, x)$, $T_{P3}(t, x)$, $T_P(t, x)$ seront désignées par la suite $T_F$, $T_{P1}$, $T_{P2}$, $T_{P3}$, $T_P$.

La mesure de la densité de flux thermique $\varphi$ (W/m$^2$) est obtenue par la mesure du gradient de température à l'aide des mesures $T_{P1}$, $T_{P2}$, $T_{P3}$:

[Math.3]

$$\overrightarrow{\varphi}.\vec{n} = -\lambda' \overrightarrow{Grad}\, T.\vec{n}$$

où $\lambda'$ est la conductivité du dispositif (W/m/K), Grad T est le gradient de température (°C/m ou K/m) dans le dispositif selon la direction Z et il est lui-même exprimé sous la forme :

[Math.4]

$$Grad\, T = \frac{\Delta T}{\Delta z}$$

Si, en régime permanent, deux plans de mesures des températures paroi sont suffisants pour déterminer une densité de flux de chaleur, en régime dynamique (transitoire type échelon de température, impulsion, fluctuations sinusoïdales), il est préférable de disposer d'au moins trois plans de mesure, pour caractériser la fréquence de la fluctuation ou le temps de réponse en représentation temporelle.

La mesure à 3 plans de mesure permet en outre de pouvoir donner une information complémentaire sur la diffusion de la chaleur dans le dispositif de mesure. En comparant les gradients de température entre $P_1$ et $P_2$, $P_2$ et $P_3$, $P_1$ et $P_3$ on peut évaluer comment la diffusion de la chaleur s'effectue à l'aide des formules :

[Math.5]

$$Grad\, T_{1-2} = \frac{T_{P2} - T_{P1}}{z_2 - z_1}$$

[Math.6]

$$Grad\, T_{2-3} = \frac{T_{P3} - T_{P2}}{z_3 - z_2}$$

[Math.7]

$$Grad\, T_{1-3} = \frac{T_{P3} - T_{P1}}{z_3 - z_1}$$

Les différents gradients de température peuvent alors être comparés entre eux et, si ces gradients de température sont sensiblement égaux, il est possible de conclure que ni puits de chaleur ni source de chaleur ne perturbent la mesure du flux thermique. On dit alors que l'on se trouve dans une situation purement 1D.

Dans le cas d'une convection pure, la densité de flux thermique par conduction dans le dispositif est égale à la densité de flux transférée par convection entre le fluide et le dispositif :

[Math.8]

$$\overrightarrow{\varphi}.\vec{n} = -\lambda' \overrightarrow{Grad}\, T.\vec{n} = h\,(T_F - T_P)$$

Le coefficient d'échange thermique h(t, x), que l'on va désigner par h (en W/m$^2$/K), est alors déduit à l'aide de l'équation :

[Math.9]

$$h = {\varphi}/{(T_F - T_P)}$$

Dans le cas où il y a une convection et un rayonnement non négligeable, la densité de flux thermique est donnée par la formule :

[Math.10]

$$\vec{\varphi}.\vec{n} = -\lambda' \overrightarrow{Grad}\, T.\vec{n} = h\,(T_F - T_P)\, \pm\, \varepsilon'\, \sigma\,(T_0{}^4 - T_P{}^4)$$

où $T_0$ est la température de référence pour le rayonnement, ε' l'émissivité du dispositif (de 0 à 1) et σ la constante de Stephan-Boltzmann ($5,67.10^{-8}$ W/m²/K⁴).

L'émissivité du dispositif est généralement choisie proche ou égale à celle de la paroi.

Le rayonnement peut apparaitre en +/- car soit le dispositif rayonne (le terme est +), soit le dispositif subit un rayonnement (le terme est -).

Le calculateur 20 peut intégrer un premier module complémentaire permettant de discriminer le rayonnement et la convection et d'isoler le coefficient d'échange thermique convectif h.

Le coefficient d'échange h pour le transfert de chaleur en convection entre le fluide et une paroi est indépendant du matériau, que ce soit le matériau du dispositif de mesure ou celui de la paroi. Cela signifie que le dispositif qui est principalement en céramique mesurera le même coefficient d'échange que celui de la paroi, avec des conditions d'écoulement locales identiques. De préférence, l'état de surface du dispositif caractérisé par sa rugosité est choisi similaire à l'état de surface de la paroi de manière à pouvoir s'assurer que le coefficient d'échange est inchangé entre la paroi et le dispositif. A noter que pour le rayonnement, les caractéristiques de l'état de surface (rugosité, mais aussi couleur) interviennent dans le transfert de chaleur par le terme εσ, l'émissivité ε dépendant également de la température de la surface, ce qui nécessite de la mesurer et d'utiliser des tables d'émissivité ou de qualifier ce paramètre. Ceci peut être intégré dans le premier module complémentaire.

Au sein de la paroi, la densité de flux de chaleur peut différer selon que la paroi est équipée du dispositif ou ne l'est pas, du fait des différences de résistances thermiques. Cette différence reste faible, compte tenu de la faible épaisseur du dispositif, Cependant le calculateur 20 peut intégrer un deuxième module complémentaire qui permet d'estimer le delta de densité de flux de chaleur dû à la présence du dispositif sur la paroi.

En sortie du calculateur 20, l'algorithme est ainsi susceptible de proposer, en fonction du temps et en un point considéré d'abscisse x :

- la température du fluide (moyenne et écart type) ;
- la température de paroi au niveau du plan $P_1$ (moyenne et écart type) ;
- la température de paroi au niveau du plan $P_2$ (moyenne et écart type) ;
- la température de paroi au niveau du plan $P_3$ (moyenne et écart-type) ;
- la température de la paroi (moyenne et écart type) ;
- la densité de flux thermique par conduction dans le dispositif et/ou par rayonnement ;
- l'estimation de la densité de flux thermique par conduction dans la paroi corrigée de la présence du dispositif ;
- les gradients de température dans le dispositif ;
- le coefficient d'échange thermique h (moyenne et écart type).

De façon préférentielle, les données délivrées par le calculateur 20 sont exprimées dans le domaine fréquentiel. C'est ainsi que le calculateur 20 délivre préférentiellement la densité spectrale de puissance DSP[h(ν, x)] à partir de la transformée de Fourier du coefficient d'échange h(t, x).

Le calculateur peut alors calculer, pour chaque pas ν de fréquence, l'expression suivante :

[Math.11]

$$DSP[h(\nu, x)] = \frac{DSP[\varphi(\nu, x)]}{DSP[\Delta T(\nu, x)]}$$

Avec

$$[Math.12]$$
$$DSP[\Delta T(v, x)] = DSP[T_F(t, x) - T_P(t, x)](v, x)$$

L'algorithme prévoit une option selon laquelle la détermination de la densité spectrale de puissance DSP[ΔT] est calculée en supposant les signaux de mesure représentatifs des températures $T_F$ et $T_P$ sans déphasage (signaux synchrones).

Dans ce cas, la densité spectrale de puissance DSP[ΔT] s'écrit :

$$[Math.13]$$
$$DSP[\Delta T(v, x)] = DSP[T_F(v, x) - T_P(v, x)]$$

L'algorithme peut déterminer une fonction de cohérence, ou fonction d'inter-corrélation en représentation spectrale, qui estime l'incertitude de la valeur du coefficient d'échange.

Comme indiqué précédemment, le dispositif de mesure de température selon l'invention permet de réduire l'épaisseur d'un système de détermination de coefficient d'échange thermique. Par exemple, les trois plans $P_1$, $P_2$ et $P_3$ de mesure de température peuvent être disposés respectivement à une distance de 0,1, 0,3 et 0,5 mm par rapport au fluide. La faible masse et les faibles dimensions du dispositif assurent la non intrusivité de la mesure pour une paroi épaisse ou réduisent fortement l'intrusivité sur une paroi fine.

Les distances entre les plans de mesure étant réduites, la différence de température mesurée l'est également. Ceci est compensé par une augmentation de la sensibilité de la mesure de température en utilisant des pistes métalliques adaptées, combinées avec des caractéristiques adaptées des couches en céramique, et éventuellement avec la discrétisation des mesures de température dans l'algorithme par des systèmes d'acquisition avec des codages à 16 bit ou 24 bit.

De préférence, on choisit des céramiques ayant des conductivités λ' comprises entre 0,062 et 230 W/m$^2$/K ce qui laisse une plage de choix assez large pour répondre au mieux aux différentes applications permettant de concevoir une gamme de dispositifs de mesure à différentes diffusivités α'.

Pour rappel une diffusivité α est reliée à la conductibilité thermique λ, la masse volumique ρ, et la capacité thermique Cp par l'équation :

$$[Math.14]$$
$$\alpha = \frac{\lambda}{\rho \, Cp}$$

Des exemples de céramiques sont donnés dans le tableau ci-dessous (comparé avec l'inox en dernière ligne) :

[Table 1]

| Céramique | Conductivité λ W/m/K | Masse volumique ρ Kg/m3 | Chaleur spécifique Cp J/kg/K | Diffusivité (m2/s) |
|---|---|---|---|---|
| Al$_2$O$_3$ | 24 à 12 | 3740 | 750 | 8,55.10$^{-6}$ à |
| | (25°C à 300°C) | | | 4,28.10$^{-6}$ |
| Al$_2$O$_3$/ZrO$_2$ | 27 à 16 (25°C à 300°C) | 400 | 720 | |
| AlN-230 AlN-170 | 230 - 145 180 - 120 (25°C à 300°C) | 3300 3300 3300 | 720 | 9,68.10$^{-5}$ |
| Si$_3$N$_4$ (SN90) | 85 (25°C) | 3220 | 680 | |

(suite)

| Céramique | Conductivité λ W/m/K | Masse volumique ρ Kg/m3 | Chaleur spécifique Cp J/kg/K | Diffusivité (m2/s) |
|---|---|---|---|---|
| Vermiculite | 0,062 | 2500 | 1080 | |
| Inox 304L | 16 | 8320 | 460 | $4,46.10^{-6}$ |

L'invention permet ainsi de concevoir plusieurs modèles de dispositifs de mesure de température et ainsi plusieurs modèles de systèmes de détermination de coefficient d'échange thermique, par exemple pour prendre en compte diverses configurations de transfert thermique, comme ceci est décrit dans les trois exemples qui suivent.

Premier exemple de configuration : mesure dans une paroi fine en régime permanent, densité de flux de chaleur φ élevé

Ce premier exemple de configuration est illustré en figures 10A et 10B.

Il peut s'agir d'une configuration à fort flux de chaleur dans une paroi fine d'échangeur thermique.

Cette configuration peut s'appliquer aux échangeurs à plaques ou à tubes dans lesquels, par conception, la paroi qui sépare les deux fluides est la plus faible possible pour réduire la résistance thermique de la paroi. Généralement les parois ont une épaisseur comprise entre 1 et 3 mm selon les conditions de pression des fluides.

Le coefficient d'échange global $h_{global}$ (avec le dispositif) peut être déterminé par la formule :

$$[Math.15]$$
$$\frac{1}{h_{global}} = \frac{1}{h_{int}} + \frac{e}{\lambda} + \frac{e'}{\lambda'} + \frac{1}{h_{ext}}$$

où e et λ sont respectivement l'épaisseur et la conductivité de la paroi, e' et λ' sont respectivement l'épaisseur et la conductivité du dispositif, $h_{int}$ est le coefficient d'échange de la paroi chaude ou paroi intérieure, et $h_{ext}$ est le coefficient d'échange de la paroi froide ou paroi extérieure.

Bénéficiant d'une densité de flux de chaleur élevée, cette configuration peut être mesurée efficacement en utilisant de préférence un matériau céramique ayant une conductivité thermique λ' proche de la conductivité thermique λ de la paroi (favorable en régime permanent) et/ou une diffusivité α' proche de la diffusivité α de la paroi (favorable en dynamique). Ceci permet d'éviter l'impact de l'épaisseur du dispositif, malgré sa faible épaisseur, sur la paroi fine. En outre, on privilégie un dispositif de mesure ayant un état de surface, et en particulier une rugosité, proche de celui de la paroi.

Le dispositif de mesure peut être disposé sur la paroi côté fluide chaud (paroi chaude ou paroi intérieure) et/ou sur la paroi côté fluide froid (paroi froide ou paroi extérieure). Dans le cas où deux dispositifs 10, 10' sont disposés (figure 10B), l'un sur la paroi chaude et l'autre sur la paroi froide, ils sont avantageusement disposés à deux niveaux différents selon la direction longitudinale X de la paroi, pour éviter de cumuler les effets des deux dispositifs et minimiser les biais sur les densités de flux de chaleur.

En régime permanent, le ΔT mesuré entre deux pistes métalliques est faible, puisque les distances des plans de mesure sont faibles, mais cet effet est compensé par des flux élevés, en plus des caractéristiques du dispositif de mesure et de l'algorithme qui ont déjà été mentionnées plus avant.

Dans l'exemple, les distances des plans de mesures, qui sont pour rappel les distances entre le fluide et lesdits plans, sont : 100 μm ($P_1$), 304 μm ($P_2$), et 500 μm ($P_3$). Les résultats ci-après sont donnés pour des couches céramiques en alumine, des pistes métalliques en platine. Pour une densité de flux de chaleur de 40 kW/m2, la différence entre les températures mesurées par le dispositif entre les plans $P_1$ et $P_2$ est de 0,27°C. Pour une densité de flux de chaleur 200 kW/m2 la différence des températures mesurées par le dispositif entre les plans $P_1$ et $P_2$ est de 1,36°C.

Deuxième exemple de configuration : mesure dans une paroi isolée en régime permanent, faible flux de chaleur φ

Ce deuxième exemple de configuration est illustré en figure 11.

Cela peut correspondre à des tuyauteries épaisses calorifugées, ayant par exemple des épaisseurs de 10 mm ou plus.

En présence de calorifuge, le coefficient d'échange global $h_{global}$ (incluant la tuyauterie, le calorifuge qui est à l'extérieur et le dispositif de mesure) est faible. En revanche, même en régime permanent, le coefficient d'échange interne $h_{int}$ (entre la tuyauterie et le fluide) peut être élevé lorsque l'écoulement du fluide transfère sa chaleur, selon les caractéristiques de l'écoulement mais pas de la présence du calorifuge qui n'a un effet que sur $h_{global}$.

Le coefficient d'échange global $h_{global}$ s'écrit :

[Math.16]

$$\frac{1}{h_{Global}} = \frac{1}{h_{int}} + \frac{e_1}{\lambda_1} + \frac{e_2}{\lambda_2} + \frac{e'}{\lambda'} + \frac{1}{h_{ext}}$$

où $e_1$ et $\lambda_1$ sont respectivement l'épaisseur et la conductivité de la tuyauterie, $e_2$ et $\lambda_2$ sont respectivement l'épaisseur et la conductivité du calorifuge, e' et $\lambda$' sont respectivement l'épaisseur et la conductivité du dispositif, $h_{int}$ est le coefficient d'échange de la paroi chaude ou paroi intérieure (canalisation), et $h_{ext}$ est le coefficient d'échange de la paroi froide ou paroi extérieure (calorifuge).

Avec une faible densité de flux thermique en régime permanent, le dispositif de mesure de température de l'invention (épaisseur de l'ordre de 0,6 mm) disposé sur la paroi intérieure n'a pratiquement pas d'effet sur le flux thermique dans la mesure où la conductivité thermique et/ou la diffusivité de la céramique du dispositif est choisie proche de celle de la canalisation.

L'alumine présentant une conductivité thermique et une diffusivité proches de celles d'une paroi en acier inoxydable (304L), les couches en céramique (et/ou le support en céramique) du dispositif seront donc de préférence en alumine. Ainsi un dispositif de mesure d'une épaisseur de 0,6 mm en alumine sur une tuyauterie de 10 mm calorifugée se comportera de la même façon que la paroi, de sorte qu'un tel dispositif présente une faible intrusivité en régime permanent.

Troisième exemple de configuration : mesure en régime dynamique à fort ou faible flux de chaleur

En dynamique, deux cas peuvent se présenter :

- soit on cherche à caractériser la dynamique d'un système visant à reproduire un échelon de température ou une autre sollicitation thermique. Dans ce cas on ne cherche pas à caractériser la réponse de la paroi à un débit de fluide mais on cherche plutôt la caractéristique de la source de sollicitation thermique (impulsion, échelon, rampe). Le dispositif de mesure peut donc être beaucoup plus rapide que la réponse de la paroi. On peut dans ce cas utiliser une céramique à haute conductivité thermique, par exemple AIN (nitrure d'aluminium) qui présente une conductivité thermique très élevée ainsi qu'une diffusivité très élevée, typiquement $9,68.10^{-5}$ m/s$^2$ contre $4,5.10^{-6}$ m/s$^2$ pour l'inox 304L. Le dispositif de mesure peut être légèrement plus épais de l'ordre de 1 mm pour écarter les plans de mesure et avoir une densité de flux plus précise (gradient de température) ;
- soit on cherche à caractériser la réponse d'une paroi à un échelon de température afin de déterminer la constante de temps de la paroi. Dans ce cas il faut choisir une céramique de diffusivité voisine de la paroi de manière à obtenir une pénétration de la chaleur dans la paroi et dans le capteur du même ordre.

De ces trois exemples de configurations, on constate que le dispositif de mesure de température participant à un système de détermination du coefficient d'échange thermique selon l'invention peut être adapté en fonction des configurations et/ou des applications visées en :

- adaptant l'épaisseur du dispositif (en adaptant notamment celle de la structure multicouche, et notamment les épaisseurs des couches en céramique) ;
- adaptant les distances entre les pistes métalliques et ainsi entre les plans de mesure ;
- choisissant des matériaux céramiques adaptés pour former les couches minces ;
- choisissant des matériaux métalliques adaptés pour former les pistes métalliques.

Le système de détermination du coefficient d'échange thermique de l'invention peut comprendre un module de communication à distance de manière à pouvoir être connecté à un Smartphone ou une tablette via une application dédiée.

Parmi les applications possibles du système de détermination du coefficient d'échange thermique de l'invention, on peut citer :

- les domaines industriels tels que les échangeurs thermiques ;
- les domaines de l'habitat, de la climatisation ;
- les domaines des vêtements intelligents, de la santé, du sport, de la météo, de l'armée ...

**Revendications**

1. Système (1) de détermination d'un coefficient d'échange thermique entre un fluide (F) et un support (P) en une surface ($P_N$) du support en contact avec le fluide (F), **caractérisé en ce qu'**il comprend un dispositif de mesure de température (10) s'étendant selon une direction longitudinale (X) et comprenant :

    - une structure multicouche (100) comportant :

        -- au moins quatre couches minces (121, 122, 123, 124) en céramique, et
        -- au moins trois pistes métalliques (111, 112, 113), chaque piste étant positionnée entre deux couches minces et intégrée dans l'épaisseur d'une desdites deux couches ;
        chaque piste étant apte à être reliée à un moyen d'alimentation électrique (301) et à un moyen de mesure de résistance (401), de sorte à former une sonde résistive apte à mesurer une température $T_{P1}$, $T_{P2}$, $T_{P3}$ en un plan de mesure ($P_1$, $P_2$, $P_3$),
        les pistes métalliques formant ainsi une pluralité de plans de mesure ($P_1$, $P_2$, $P_3$) parallèles entre eux et sensiblement alignés selon une direction (Z) perpendiculaire à la surface ($P_N$) ; et

    - une sonde résistive de température (200) attachée à la structure multicouche (100) et destinée à être en contact avec le fluide (F) de manière à mesurer une température de fluide $T_F$ ;

    le système comprenant en outre un calculateur (20) comportant :

    - des premiers moyens pour calculer, à partir des valeurs de température $T_{P1}$, $T_{P2}$, $T_{P3}$ mesurées par les au moins trois pistes métalliques, une valeur de température moyenne de paroi $T_P$ et une densité de flux thermique $\varphi$ ; et
    - des seconds moyens pour calculer, à partir de la température de fluide $T_F$, de la température moyenne de paroi $T_P$ et de la densité de flux thermique $\varphi$, un coefficient d'échange thermique h.

2. Système selon la revendication 1 **caractérisé en ce qu'**au moins une piste métallique est configurée pour former au moins une sonde résistive à haute sensibilité, correspond à une sensibilité supérieure ou égale à 0,3 $\Omega$/°C, et étant de préférence supérieure ou égale à 1,3 $\Omega$/°C.

3. Système selon la revendication 1 ou la revendication 2 **caractérisé en ce qu'**au moins une piste métallique est configurée pour former une résistance initiale $R(T_0)$ supérieure ou égale à 300 $\Omega$.

4. Système selon l'une quelconque des revendications précédentes, la structure multicouche comprenant plus de quatre couches minces en céramique, et plus de trois pistes métalliques, chaque piste étant positionnée entre deux couches minces et étant intégrée dans l'épaisseur d'une des deux couches.

5. Système selon l'une quelconque des revendications précédentes **caractérisé en ce qu'**au moins une piste métallique est en platine, en argent, en nickel, ou en un alliage métallique.

6. Système selon l'une quelconque des revendications précédentes **caractérisé en ce qu'**au moins une couche mince céramique est en alumine ($Al_2O_3$), en zircone ($ZrO_2$), en un composite alumine/zircone, en nitrure d'aluminium (AlN), en nitrure de silicium ($Si_3N_4$) ou en oxyde de béryllium (BeO).

7. Système selon l'une quelconque des revendications précédentes **caractérisé en ce qu'**au moins une couche mince en céramique présente une épaisseur inférieure ou égale à 300 $\mu$m, de préférence inférieure ou égale à 200 $\mu$m.

8. Système selon l'une quelconque des revendications précédentes **caractérisé en ce que** la couche mince en céramique (124) destinée à être en contact avec la surface ($P_N$) du support présente une épaisseur d'au moins 150 $\mu$m.

9. Système selon l'une quelconque des revendications précédentes **caractérisé en ce qu'**au moins une extrémité (100A) de la structure multicouche (100) dans la direction longitudinale (X) est prolongée par une forme de biseau (101A) permettant de réduire progressivement l'épaisseur de ladite structure au niveau de ladite extrémité, de préférence l'extrémité destinée à faire face au débit de fluide (F).

10. Système selon la revendication 9, **caractérisé en ce que** les deux extrémités (100A, 100B) de la structure multicouche (100) sont prolongées par une forme de biseau (101A, 101B) dans la direction longitudinale (X) correspondant à la direction de circulation du fluide (F).

**11.** Système selon l'une quelconque des revendications précédentes **caractérisé en ce qu'**il comprend au moins un moyen d'alimentation électrique (301) et au moins un moyen de mesure de résistance (401) connectés à chaque piste métallique (111, 112, 113), et de préférence à la sonde résistive de température de fluide (200).

**12.** Système selon la revendication 11, chaque piste métallique (111, 112, 113) étant connectée d'une part au moyen d'alimentation électrique (301) via un circuit d'alimentation (311, 321) et d'autre part au moyen de mesure (401) de la résistance via un circuit de mesure (411, 421), au moyen d'alimentation électrique (301), de manière à former un montage 4 fils.

**Patentansprüche**

**1.** System (1) zum Bestimmen eines Wärmetauschkoeffizienten zwischen einem Fluid (F) und einem Träger (P) an einer Oberfläche ($P_N$) des Trägers, die mit dem Fluid (F) in Kontakt steht, **dadurch gekennzeichnet, dass** es eine Temperaturmessvorrichtung (10) umfasst, die sich entlang einer Längsrichtung (X) erstreckt und Folgendes umfasst:

    - eine mehrschichtige Struktur (100), Folgendes aufweisend:

        -- mindestens vier dünne Schichten (121, 122, 123, 124) aus Keramik, und
        -- mindestens drei metallische Spuren (111, 112, 113), wobei jede Spur zwischen zwei dünnen Schichten positioniert und in die Dicke einer der beiden Schichten integriert ist;

    wobei jede Spur in der Lage ist, mit einem Stromversorgungsmittel (301) und einem Widerstandsmessmittel (401) verbunden zu werden, um einen Widerstandsfühler zu bilden, der in der Lage ist, eine Temperatur $T_{P1}$, $T_{P2}$, $T_{P3}$ in einer Messebene ($P_1$, $P_2$, $P_3$) zu messen, wobei die Metallspuren so eine Vielzahl von Messebenen ($P_1$, $P_2$, $P_3$) bilden, die parallel zueinander und im Wesentlichen in einer Richtung (Z) senkrecht zu der Oberfläche ($P_N$) ausgerichtet sind; und
    - einen Widerstandstemperaturfühler (200), der an der mehrschichtigen Struktur (100) angebracht ist und dazu bestimmt ist, mit dem Fluid (F) in Kontakt zu stehen, um eine Fluidtemperatur $T_F$ zu messen;

    wobei das System ferner einen Rechner (20) umfasst, der Folgendes aufweist:

    - erste Mittel, um anhand der von den mindestens drei Metallspuren gemessenen Temperaturwerten $T_{P1}$, $T_{P2}$, $T_{P3}$ einen mittleren Wandtemperaturwert $T_P$ und eine Wärmestromdichte $\varphi$ zu berechnen; und
    - zweite Mittel, um anhand der Fluidtemperatur $T_F$, der mittleren Wandtemperatur $T_P$ und der Wärmestromdichte $\varphi$ einen Wärmetauschkoeffizienten h zu berechnen.

**2.** System nach Anspruch 1, **dadurch gekennzeichnet, dass** mindestens eine Metallspur so konfiguriert ist, dass sie mindestens einen hochempfindlichen Widerstandsfühler bildet, einer Empfindlichkeit von 0,3 $\Omega$/°C oder mehr entspricht und der vorzugsweise 1,3 $\Omega$/°C oder mehr beträgt.

**3.** System nach Anspruch 1 oder Anspruch 2, **dadurch gekennzeichnet, dass** mindestens eine Metallspur so konfiguriert ist, dass sie einen Anfangswiderstand $R(T_0)$ von größer oder gleich 300 $\Omega$ bildet.

**4.** System nach einem der vorhergehenden Ansprüche, wobei die mehrschichtige Struktur vier dünne Schichten aus Keramik, und mehr als drei Metallspuren umfasst, wobei jede Spur zwischen zwei dünnen Schichten positioniert und in die Dicke einer der beiden Schichten integriert ist.

**5.** System nach einem der vorhergehenden Ansprüche, **dadurch gekennzeichnet, dass** mindestens eine Metallspur aus Platin, Silber, Nickel oder einer Metalllegierung besteht.

**6.** System nach einem der vorhergehenden Ansprüche, **dadurch gekennzeichnet, dass** mindestens eine keramische Dünnschicht aus Aluminiumoxid ($Al_2O_3$), Zirkoniumoxid ($ZrO_2$), einem Aluminiumoxid/Zirkoniumoxid-Verbundstoff, Aluminiumnitrid (AlN), Siliziumnitrid ($Si_3N_4$) oder Berylliumoxid (BeO) besteht.

**7.** System nach einem der vorhergehenden Ansprüche, **dadurch gekennzeichnet, dass** mindestens eine dünne Schicht aus Keramik eine Dicke von weniger als oder gleich 300 $\mu$m, vorzugsweise weniger als oder gleich 200 $\mu$m, aufweist.

**8.** System nach einem der vorhergehenden Ansprüche, **dadurch gekennzeichnet, dass** die dünne Schicht aus Keramik (124), die dazu bestimmt ist, mit der Oberfläche ($P_N$) des Trägers in Kontakt zu stehen, eine Dicke von mindestens 150 $\mu$m aufweist.

**9.** System nach einem der vorhergehenden Ansprüche, **dadurch gekennzeichnet, dass** mindestens ein Ende (100A) der mehrschichtigen Struktur (100) in der Längsrichtung (X) durch eine abgeschrägte Form (101A) verlängert ist, die es ermöglicht, die Dicke der Struktur an diesem Ende, vorzugsweise dem Ende, das dazu bestimmt ist, dem Fluidstrom (F) zugewandt zu sein, progressiv zu reduzieren.

**10.** System nach Anspruch 9, **dadurch gekennzeichnet, dass** beide Enden (100A, 100B) der mehrschichtigen Struktur (100) durch eine abgeschrägte Form (101A, 101B) in der Längsrichtung (X) verlängert sind, die der Richtung des Fluidstroms (F) entspricht.

**11.** System nach einem der vorhergehenden Ansprüche, **dadurch gekennzeichnet, dass** es mindestens ein Stromversorgungsmittel (301) und mindestens ein Widerstandsmessmittel (401) umfasst, die mit jeder Metallspur (111, 112, 113) und vorzugsweise mit dem Widerstands-Fluidtemperaturfühler (200) verbunden sind.

**12.** System nach Anspruch 11, wobei jede Metallspur (111, 112, 113) einerseits über eine Versorgungsschaltung (311, 321) mit dem Stromversorgungsmittel (301) und andererseits mit dem Widerstandsmessmittel (401) über eine Messschaltung (411, 421) mit dem Stromversorgungsmittel (301) verbunden ist, um eine 4-Draht-Schaltung zu bilden.

**Claims**

**1.** A system (1) for determining a coefficient of heat exchange between a fluid (F) and a support (P) at a surface ($P_N$) of the support in contact with the fluid (F), **characterised in that** it comprises a temperature measurement device (10) extending in a longitudinal direction (X) and comprising:

- a multilayer structure (100) having:

-- at least four thin ceramic layers (121, 122, 123, 124), and
-- at least three metal tracks (111, 112, 113), each track being positioned between two thin layers and integrated into the thickness of one of said two layers;

each track being connectable to an electrical power supply means (301) and to a resistance measurement means (401) so as to form a resistive probe able to measure a temperature $T_{P1}$, $T_{P2}$, $T_{P3}$ in a measurement plane ($P_1$, $P_2$, $P_3$), the metal tracks thus forming a plurality of measurement planes ($P_1$, $P_2$, $P_3$) parallel to one another and substantially aligned in a direction (Z) perpendicular to the surface ($P_N$); and
- a resistive temperature probe (200) attached to the multilayer structure (100) and intended to be in contact with the fluid (F) so as to measure a fluid temperature $T_F$;

the system further comprising a computer (20) having:

- first means for calculating, from the temperature values $T_{P1}$, $T_{P2}$, $T_{P3}$ measured by the at least three metal tracks, a mean wall temperature value $T_P$ and a heat flow density $\varphi$; and
- second means for calculating a heat exchange coefficient h from the fluid temperature $T_F$, the mean wall temperature $T_P$ and the heat flow density $\varphi$.

**2.** The system according to claim 1 **characterised in that** at least one metal track is configured to form at least one high-sensitivity resistive probe, corresponds to a sensitivity greater than or equal to 0.3 $\Omega$/°C and preferably greater than or equal to 1.3 $\Omega$/°C.

**3.** The system according to claim 1 or claim 2, **characterised in that** at least one metal track is configured to form an

initial resistance $R(T_0)$ greater than or equal to 300 Q.

4. The system according to any one of the preceding claims, the multilayer structure comprising more than four thin ceramic layers and more than three metal tracks, each track being positioned between two thin layers and being integrated into the thickness of one of the two layers.

5. The system according to any one of the preceding claims, **characterised in that** at least one metal track is made of platinum, silver, nickel or a metal alloy.

6. The system according to any one of the preceding claims, **characterised in that** at least one thin ceramic layer is made of alumina ($Al_2O_3$), zirconia ($ZrO_2$), an alumina/zirconia composite material, aluminum nitride (AlN), silicon nitride ($Si_3N_4$) or beryllium oxide (BeO).

7. The system according to any one of the preceding claims, **characterised in that** at least one thin ceramic layer has a thickness less than or equal to 300 $\mu$m, preferably less than or equal to 200 $\mu$m.

8. The system according to any one of the preceding claims, **characterised in that** the thin ceramic layer (124) intended to be in contact with the surface ($P_N$) of the support has a thickness of at least 150 $\mu$m.

9. The system according to any one of the preceding claims, **characterised in that** at least one end (100A) of the multilayer structure (100) in the longitudinal direction (X) is extended by a bevel shape (101A) enabling progressive reduction of the thickness of said structure at the level of said end, preferably the end intended to face the flow of fluid (F).

10. The system according to claim 9, **characterised in that** the two ends (100A, 100B) of the multilayer structure (100) are extended by a bevel shape (101A, 101B) in the longitudinal direction (X) corresponding to the direction of circulation of the fluid (F).

11. The system according to any one of the preceding claims, **characterised in that** it comprises at least one electrical power supply means (301) and at least one resistance measurement means (401) connected to each metal track (111, 112, 113) and preferably to the resistive fluid temperature probe (200).

12. The system according to claim 11, each metal track (111, 112, 113) being connected, on the one hand, to the electrical power supply means (301) via a power supply circuit (311, 321) and, on the other hand, to the resistance measurement means (401) via a measurement circuit (411, 421), by means of the electrical power supply means (301), so as to form a 4-wire connection.

EP 4 244 589 B1

[Fig. 1]

[Fig.2A]

[Fig.2B]

[Fig.3]

[Fig.4A]

[Fig.4B]

[Fig. 4C]

[Fig.5]

[Fig.6]

[Fig.7]

[Fig.8]

[Fig.9]

1

10

20

$\lambda', \rho', Cp'$

$T_F$

$T_{P1}, T_{P2}, T_{P3}$

$T_P, \varphi$

h
DSP $[h(\nu, S)]$

[Fig.10A]

[Fig.10B]

27

[Fig.11]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2940435 A1

- EP 3106852 A1

**Littérature non-brevet citée dans la description**

- Thermal load détermination in the mixing tee impacted by a turbulent flow generated by two fluids at large gap of température. **OLIVIER BRAILLARD ; YVON JARNY ; GUILLAUME BALMIGERE.** 13th International Conférence on Nuclear Engineering ; Pékin, Chine ; 16-20 Mai 2005. ICONE, 13-50361